# FASCICULE DE BREVET EUROPEEN

(11) **EP 1 430 248 B1**
(45) Date de publication et mention de la délivrance du brevet: **17.08.2005**
(21) Numéro de dépôt: 02783196.5
(22) Date de dépôt: 23.09.2002
(51) Int. Cl.: F16L 23/02, F16L 21/08

(54) **JOINT POUR RACCORDER DEUX ELEMENTS TUBULAIRES ET SON PROCEDE DE MONTAGE**
ZUR VERBINDUNG ZWEIER RÖHRENFÖRMIGER ELEMENTE VERWENDETE KUPPLUNG UND MONTAGEVERFAHREN DAFÜR
JOINT USED TO CONNECT TWO TUBULAR ELEMENTS AND THE ASSEMBLY METHOD FOR SAME

(30) Priorité: 26.09.2001 FR 0112391
(43) Date de publication de la demande: 23.06.2004
(73) Titulaire: SAINT-GOBAIN PAM, 54000 Nancy (FR)
(72) Inventeur: VITEL, Jean-Pierre, F-54470 Thiaucourt-Regnieville (FR); LECHEVALLIER, Gilles, F-54250 Champigneulles (FR); RENARD, Philippe, F-54710 Fleville (FR)
(74) Mandataire: Blot, Philippe Robert Emile
(86) Numéro de dépôt international: PCT/FR2002/003244
(87) Numéro de publication internationale: WO 2003/027560

(56) Documents cités:
- DE-A- 19 712 439
- DE-C- 358 329
- US-A- 3 141 686
- PATENT ABSTRACTS OF JAPAN vol. 2000, no. 03, 30 mars 2000 (2000-03-30) & JP 11 336963 A (KAWANISHI SUIDO KIKI:KK), 7 décembre 1999 (1999-12-07)

## Description

La présente invention concerne un joint selon le préambule de la revendication 1.

Elle s'applique notamment à l'assemblage étanche d'éléments de canalisation entrant dans la constitution de réseaux d'adduction d'eau potable ou d'évacuation des eaux usées.

Il est connu des joints pour relier de façon étanche un premier élément tubulaire ayant un bout uni à un second élément tubulaire.

De tels joints comprennent un corps de base comportant un bout à emboîtement de réception du bout uni et une bride extérieure. Ils comprennent de plus une garniture d'étanchéité et une contre-bride propre à comprimer la garniture d'étanchéité lors du serrage de boulons qui relient la bride à la contre-bride.

Le montage de ces joints s'effectue de la façon suivante :
- on engage la contre-bride et la garniture d'étanchéité autour du bout uni du tube ;
- on engage le bout à emboîtement autour du bout uni ;
- on rapproche la contre-bride et la garniture d'étanchéité du bout à emboîtement, et on aligne les trous de fixation de la bride et de la contre-bride ;
- on insère des boulons dans les trous de la bride et de la contre-bride ;
- on serre la contre-bride contre le bout à emboîtement.

La garniture d'étanchéité est de ce fait comprimée axialement et radialement et s'applique contre la surface extérieure du bout uni.

Le temps de montage de ce joint est important, du fait des nombreuses pièces détachées à manipuler. De plus, l'alignement de la contre-bride par rapport à la bride est difficile à effectuer sur chantier, notamment dans une tranchée lorsque le bout uni est immergé dans de l'eau opaque.

Si on veut pouvoir engager ce joint autour du bout uni alors que la contre-bride est déjà reliée à la bride, c'est-à-dire à l'état pré-monté, il est alors nécessaire au préalable de serrer les boulons afin d'empêcher la contre-bride de glisser librement le long des boulons vers le bout à emboîtement. Le serrage des boulons comprime alors la garniture d'étanchéité, nécessitant par la suite l'enfichage à force du bout uni dans le bout à emboîtement. La garniture d'étanchéité comprimée s'oppose ainsi à l'introduction manuelle du bout uni dans le bout à emboîtement.

L'invention a pour but de proposer un joint de liaison qui soit facile et rapide à monter et qui permette l'introduction manuelle, c'est-à-dire à faible effort, du bout uni dans le bout à emboîtement alors que la contre-bride au préalable est reliée par boulons à la bride du corps de base.

A cet effet, l'invention a pour objet un joint comportant les caractéristiques de la revendication 1.

Des modes particuliers de réalisation de l'invention sont décrits dans les revendications dépendantes.

L'invention a en outre pour objet un procédé de montage d'un joint tel que défini ci-dessus, caractérisé par les étapes de la revendication 19.

L'invention sera mieux comprise à la lecture de la description qui va suivre, donnée uniquement à titre d'exemple et faite en se référant aux dessins annexés, sur lesquels :
- la Figure 1 est une vue en coupe brisée suivant la ligne I-I de la Figure 2, à l'état monté du joint ;
- la Figure 2 est une vue en bout d'un joint de liaison selon l'invention, à l'état pré-assemblé, avant montage des premier et second éléments tubulaires ;
- les Figures 3 et 4 sont des vues en coupe brisée suivant la ligne III-III de la Figure 2, à différentes étapes de montage du joint ;
- la Figure 5 est une vue identique à celle de la Figure 3 d'un deuxième mode de réalisation du joint selon l'invention ;
- la Figure 6 est une vue en coupe brisée suivant la ligne VI-VI de la Figure 9 d'un troisième mode de réalisation d'un joint selon l'invention ;
- la Figure 7 est une vue en perspective du manchon du joint de la Figure 6 ;
- la Figure 8 est une vue en perspective d'une bride du joint de la Figure 6 ;
- la Figure 9 est une vue axiale de la bride de la Figure 8 ;
- les Figures 10A et 10B sont des vues de parties du joint de la Figure 6 dans une autre configuration, ces vues étant en coupe suivant les lignes XA-XA et XB-XB de la Figure 9 ;
- la Figure 11 est une vue en perspective d'une variante du manchon de la Figure 7 ; et
- la Figure 12 est une vue en coupe d'une variante de la partie du joint de la Figure 10B.

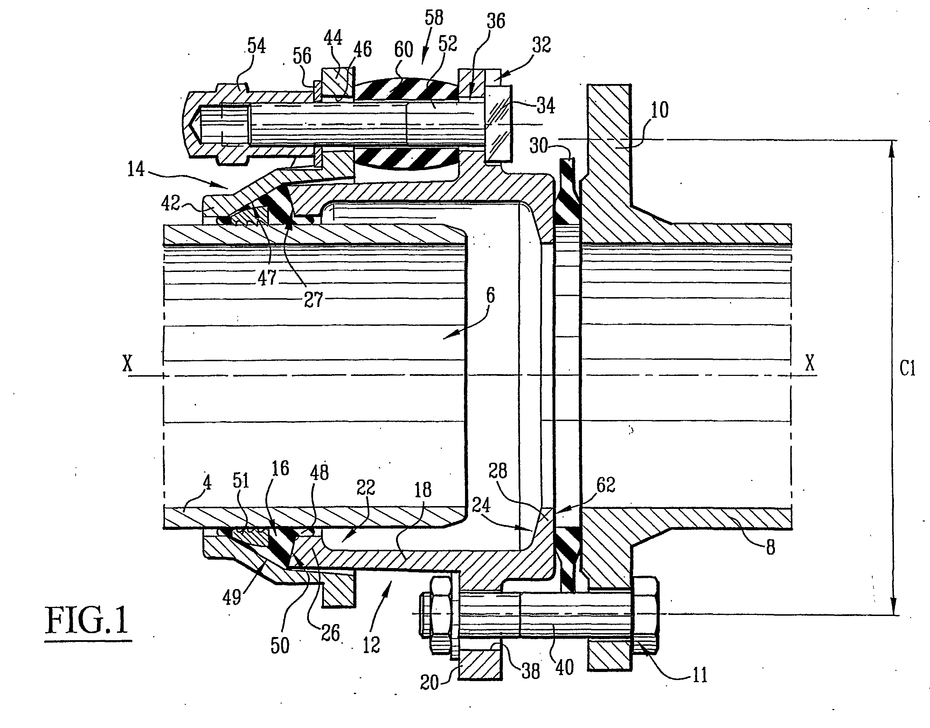

Sur les Figures 1 à 4 est représenté un premier mode de réalisation d'un joint de liaison selon l'invention, désigné par la référence générale 2.

Comme représenté sur la Figure 1, le joint 2 sert à relier de façon étanche un premier tube 4 par exemple en fonte, ayant un bout uni 6, à un second tube 8, par exemple en fonte, ayant une bride 10.

La bride 10 comporte des trous 11 de fixation. Les centres des trous de fixation 11 se trouvent sur un cercle primitif C1. Les diamètres des trous 11 et du cercle primitif C1 sont choisis en fonction de la pression nominale du tube 8 à bride 10.

Le joint 2 comprend un corps de base 12 et une contre-bride 14, par exemple en fonte, ainsi qu'une garniture d'étanchéité 16.

Le corps de base 12 est constitué d'un manchon 18 en forme générale de cylindre creux d'axe X-X et d'une bride extérieure 20 s'étendant suivant toute la périphérie du manchon 18. La bride 20 est venue de matière avec le manchon 18. Dans ce qui suit, les expressions « radialement », « axialement » et « circonférentiellement » seront utilisées par rapport à cet axe X-X.

Le manchon 18 comporte des première 22 et seconde 24 extrémités axiales. La première extrémité 22, à gauche sur les Figures, constitue un bout à emboîtement 26, qui entoure, à l'état monté du joint, le bout uni 6. A l'extrémité du bout à emboîtement 26 est délimitée suivant son épaisseur une surface annulaire 27 généralement tronconique d'appui de la garniture 16. La surface 27 est dirigée vers l'axe X-X. La seconde extrémité 24 du manchon 18 comporte un rebord rentrant 28, s'étendant radialement vers l'intérieur et sur laquelle s'applique, coaxialement à l'axe X-X, un anneau d'étanchéité 30 plat en matériau élastomère.

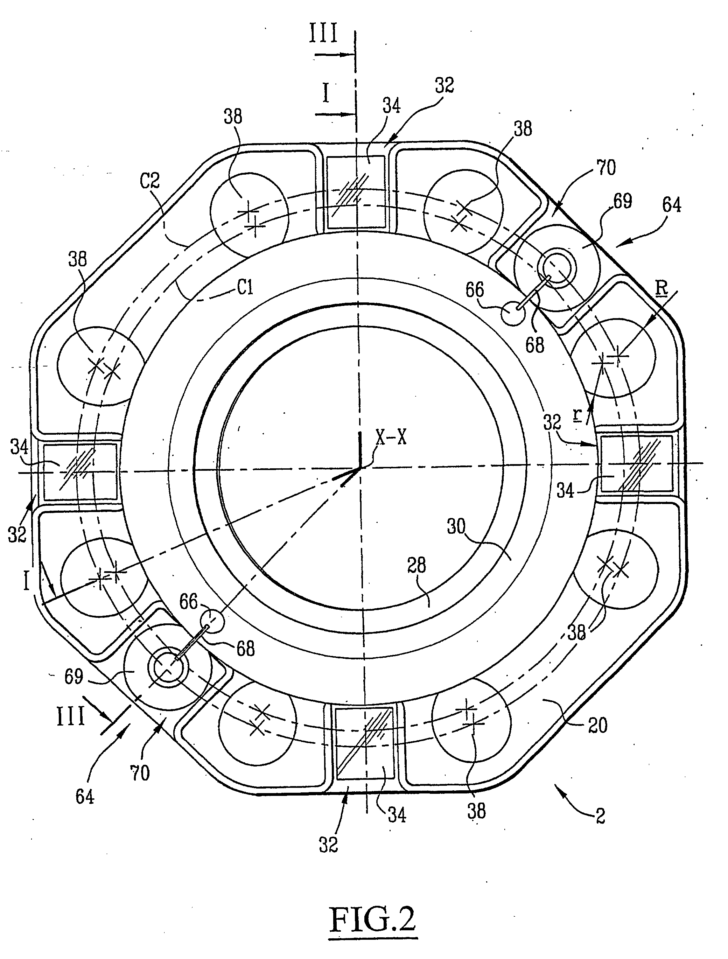

En vue axiale, comme représentée sur la Figure 2, la bride 20 a une forme extérieure octogonale à coins arrondis. Elle comporte quatre renfoncements 32 sensiblement parallélépipédiques pour des têtes de vis 34 destinées à la liaison de la bride 20 et de la contre-bride 14. A l'emplacement de chacun des renfoncements 32, la bride 20 comporte un premier trou de fixation 36.

Elle comporte en outre huit seconds trous oblongs de fixation 38 pour la liaison à la bride 10 du second tube 8. Chacun de ces huit trous 38 présente une section transversale de forme allongée suivant la direction radiale à extrémités en arc de cercle (Figure 2). L'extrémité radialement intérieure de chaque trou 38 a un rayon r de courbure inférieur au rayon de courbure R de l'extrémité radialement extérieure. Les centres des arcs de cercle des parties extérieures sont situés sur un cercle primitif C2, tandis que les centres des arcs de cercle des parties intérieures sont situés sur le cercle primitif C1. De ce fait, les trous 38 permettent d'utiliser différentes tailles de boulons pour relier la bride 20 à des seconds tubes 8 ayant des brides 10 de différents types, la taille et la position radiale des boulons utilisés étant fonction de la pression nominale du tube 8 à bride 10. Comme représenté sur la Figure 1, la bride 20 du joint 2 est fixée à la bride 10 du second tube 8 par des boulons 40 à tête hexagonale classiques.

On obtient ainsi une bride 20 compatible avec des tubes 8 à bride 10 dans une large gamme de pressions nominales.

La contre-bride 14 est constituée d'un anneau de serrage 42 de forme générale tronconique creux et de quatre projections extérieures 44 radiales de fixation, dont une est visible sur les Figures. Un alésage 46 est ménagé dans chaque projection 44, parallèlement à l'axe X-X pour le passage d'une vis.

L'anneau de serrage 42 comporte une surface tronconique 47 formant came. Cette surface 47 s'élargit vers le bout à emboîtement 26.

La garniture d'étanchéité 16 est constituée d'un anneau 48 en matière élastique, par exemple en élastomère, comportant deux surfaces tronconiques 49, 50 de forme complémentaire respectivement aux surfaces 47, 27. Des éléments métalliques de verrouillage axial 51, connus en soi sont incorporés dans cet anneau 48.

La contre-bride 14 est disposée coaxialement au bout à emboîtement 26, et la garniture d'étanchéité 16 est disposée entre la contre-bride 14 et le bout à emboîtement 26, également coaxialement à celui-ci.

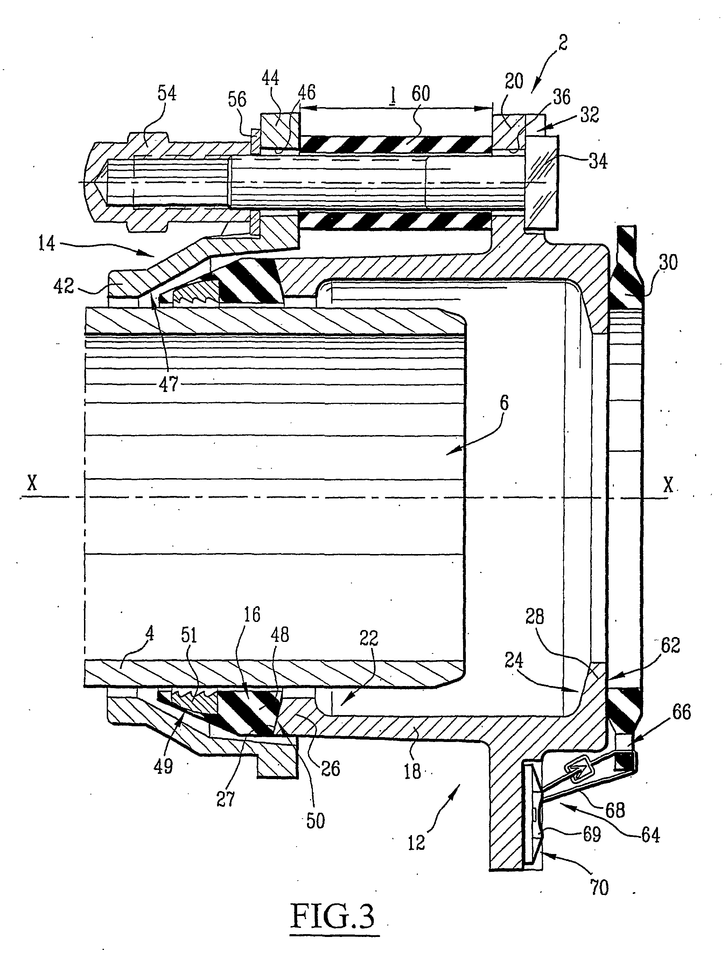

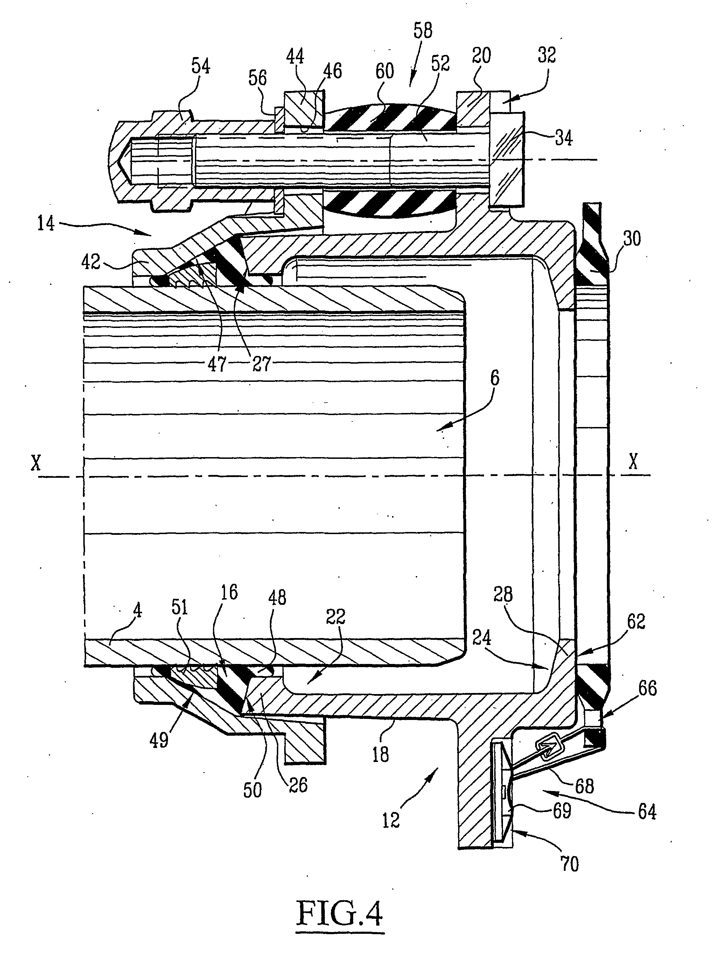

La contre-bride 14 est mobile par rapport au corps de base 12 entre une position de montage, telle que représentée sur la Figure 3, et une position de serrage, telle que représentée sur la Figure 4.

Dans sa position de montage, la contre-bride 14 est espacée du bout à emboîtement 26 de telle sorte que la garniture d'étanchéité 16 soit dans un état détendu et que cette dernière permette un enfichage manuel du bout uni 6 dans le bout à emboîtement 26. En particulier, le diamètre intérieur de la garniture 16 est supérieur au diamètre extérieur du bout uni 6. Dans sa position de serrage (Figure 4), la contre-bride 14 comprime axialement la garniture d'étanchéité 16 contre le bout à emboîtement 26. Dans cette position, les surfaces tronconiques 27, 47 compriment la garniture 16 radialement vers l'intérieur contre le bout uni 6, assurant ainsi l'étanchéité par effet de coin.

Une vis 52 à tête rectangulaire 34 est enfilée dans chacun des premiers trous 36, et s'étend à travers les alésages 46 de la contre-bride 14. Comme montré sur la Figure 2, la tête 34 de chaque vis 52 est bloquée en rotation par coopération par complémentarité de formes avec les parois d'un des renfoncements 32. Un écrou borgne 54 est vissé sur chaque vis 52. Par ailleurs, une rondelle 56 est interposée entre chaque écrou borgne 54 et la projection 44 correspondante de la contre-bride 14.

Une entretoise déformable 58 est interposée entre la bride 20 et la contre-bride 14. En l'occurrence, l'entretoise déformable 58 est constituée de quatre douilles 60 en matière élastique, telle que l'Ethylène - Propylène - Diène - Monomer (EPDM), entourant chacune une vis 52 sur le tronçon situé entre la projection 44 et la bride 20.

A l'état détendu, les douilles 60 sont en forme de cylindre creux et ont une longueur axiale l qui correspond à l'écart entre la bride 20 et les projections 44 de la contre-bride lorsque cette dernière est dans sa position de montage, position dans laquelle la garniture d'étanchéité 16 se trouve dans un état détendu. La longueur l des douilles 60 est par ailleurs choisie de telle sorte que leur déformation subie, lorsque la contre-bride 14 est dans sa position de serrage, soit essentiellement élastique.

Ainsi, les douilles 60 constituent des moyens de poussée qui sollicitent la contre-bride 14 vers sa position de montage lorsque celle-ci se trouve dans sa positon de serrage. Les douilles élastiques 60 peuvent être comprimées axialement de manière élastique sous l'effort de serrage des vis 52.

Le rebord 28 de la seconde extrémité 24 du corps de base présente une surface frontale 62 qui s'étend perpendiculairement à l'axe X-X. L'anneau d'étanchéité 30 est appliqué sur cette surface 62, coaxialement à l'axe X-X. Il est retenu dans cette position de façon autonome, à l'état non monté du joint, par des attaches 64 portées par la bride 20 et visibles sur les Figures 2 à 4. A cet effet, l'anneau 30 comporte deux ouvertures 66 diamétralement opposées et ménagées sur sa partie radialement extérieure. Une boucle 68 de chaque attache en matière plastique, par exemple en Polyethylène (PE), s'étend à travers chaque ouverture 66 et est fixée sur la bride par une rondelle 69 en matière plastique. Chaque rondelle 69 est collée dans un évidement 70 ménagé dans la bride 20.

L'assemblage du joint 2 en usine s'effectue de la façon suivante.

Les vis 52 sont enfichées dans les premiers trous 36 de la bride 20. Puis les douilles élastiques 60 sont mises en place sur les vis 52. Ensuite, la garniture d'étanchéité 16 est posée sur le bout à emboîtement 26, et la contre-bride 14 ainsi que les rondelles 56 sont enfichées sur les vis 52, du côté de la bride dirigé vers le bout à emboîtement 26.

Enfin, les écrous borgnes 54 sont vissés sur les extrémités des vis 52, de telle sorte que les douilles élastiques 60 soient légèrement serrées sans que la garniture d'étanchéité 16 soit comprimée.

L'anneau d'étanchéité 30 est appliqué sur la surface frontale 62 du rebord 28 et les rondelles 69 sont collées sur les évidements 70 correspondants de la bride.

Le montage du joint selon l'invention s'effectue alors de la façon suivante.

Tout d'abord, le joint 2 pré-assemblé en usine est orienté coaxialement par rapport au bout uni 6, la contre-bride 14 étant tournée vers celui-ci. Puis la contre-bride 14, la garniture d'étanchéité 16 et le bout à emboîtement 26 sont enfichés simultanément sur le bout uni 6. La contre-bride 14 est maintenue axialement à distance de la garniture d'étanchéité 16 par les douilles élastiques 60 lors de cet enfichage. En conséquence, comme montré sur la Figure 3, la garniture d'étanchéité 16 reste à l'état détendu, dans lequel elle permet une introduction manuelle à faible effort du bout uni 6 dans le bout à emboîtement 26. Lorsque le joint 2 se trouve axialement dans sa position souhaitée sur le bout uni 6, les écrous borgnes 54 sont serrés. La contre-bride 14 se déplace alors axialement vers la bride 20, en comprimant élastiquement les douilles déformables 60, et en comprimant axialement la garniture d'étanchéité 16 contre le bout à emboîtement 26, comme ceci est représenté sur la Figure 4 ; la garniture 16 se déforme alors radialement jusqu'à venir en contact étanche avec la surface extérieure du bout uni 6.
Etant donné que les douilles 60 sont en matière élastique et ont une surface de révolution fermée, elles assurent en outre une étanchéité contre la corrosion de la tige de chacune des vis 52 vis-à-vis de l'humidité environnante.

Puis on applique la bride 10 du second tube contre l'anneau d'étanchéité 30, comme représenté sur la Figure 1. Les deux brides 10, 20 sont serrées l'une contre l'autre par les boulons 40, entraînant ainsi la compression de l'anneau 30 et, en conséquence, l'étanchéité de la jonction entre le corps 12 et le tube 8. Lors de la manipulation du joint 2, l'anneau d'étanchéité 30 est maintenu dans sa position de montage par les rondelles 69 et les boucles 68, facilitant ainsi le raccordement avec le tube 8.

Le joint de liaison selon l'invention est facile à monter, grâce au fait que la contre-bride 14, la garniture d'étanchéité 16 et le bout à emboîtement 26, initialement pré-assemblés en usine, puissent être manipulés et enfichés simultanément à moindre effort sur le bout uni 6, l'enfichage s'effectuant manuellement sur chantier.

Lorsque les vis 52/écrous 54 sont desserrés, la contre-bride 14 est amenée dans sa position de montage et y est maintenue sous l'effort élastique axial exercé par les douilles 60.

Ainsi, le joint peut être monté de nouveau facilement sur un bout uni sans que la contre-bride 14 comprime la garniture d'étanchéité 16.

En variante, la garniture d'étanchéité 16 peut être remplacée par une garniture d'étanchéité dépourvue d'éléments de verrouillage 51 lorsque seule la fonction d'étanchéité est requise.

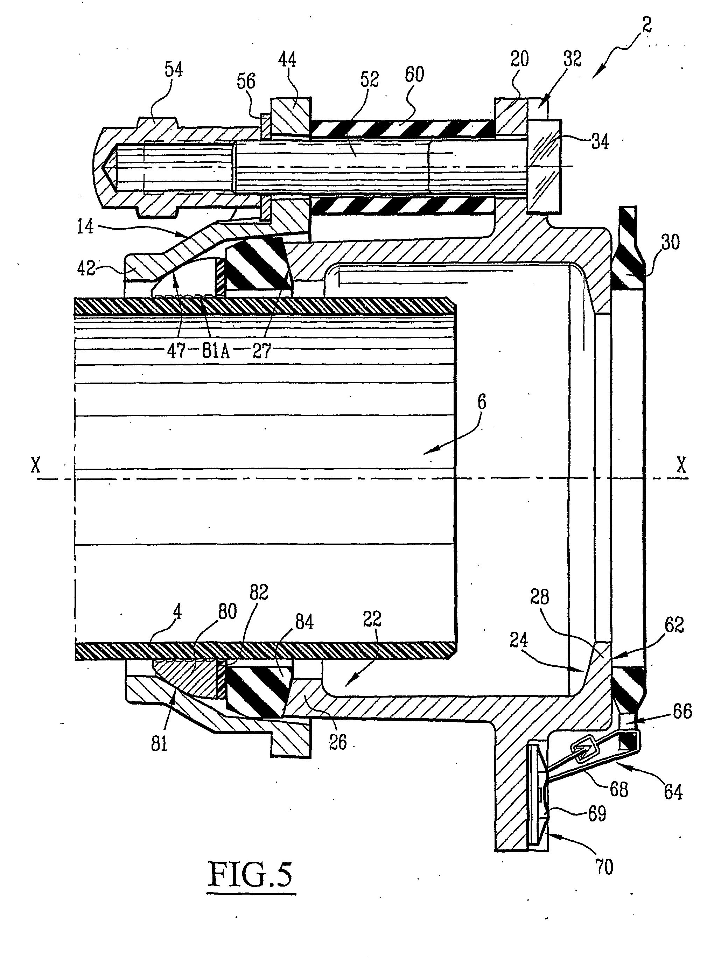

Sur la Figure 5 est représenté un deuxième mode de réalisation d'un joint selon l'invention.

Dans ce qui suit uniquement les différences par rapport au premier mode de réalisation seront décrites. Les éléments analogues portent des références identiques.

Ce joint de liaison relie un premier tube 4 en matière plastique à bout uni 6 à un second tube identique au tube 8 du premier mode de réalisation.

Le joint 2 comporte une bague de verrouillage fendue 80, une rondelle 82 non fendue, métallique ou en matière plastique tel que par exemple en « NYLON », et une garniture d'étanchéité 84 en une matière élastique, par exemple en Ethylène - Propylène - Diène - Monomer (EPDM).

La rondelle 82 est interposée entre la garniture d'étanchéité 84 et la bague de verrouillage 80 de manière à assurer la répartition de pression et pour empêcher la garniture 84, lors de sa compression, de fluer à travers la fente de la bague 80.

La bague de verrouillage 80 est par exemple en laiton. Elle comporte une surface formant came 81 convexe, qui coopère avec la surface 47 de l'anneau de serrage 42 ainsi que des dents d'accrochage 81A coopérant avec le tube 4. La bague d'étanchéité 84, la bague de verrouillage 80 et la rondelle 82 sont des pièces distinctes.

L'assemblage de ce joint 2 s'effectue de façon analogue à celui du premier mode de réalisation. Comme différence, avant d'enficher la contre-bride 14 sur les vis 52, la bague d'étanchéité 84, la rondelle 82 et la bague de verrouillage 80 sont appliquées l'une contre l'autre respectivement contre la surface 27 du bout à emboîtement 26.

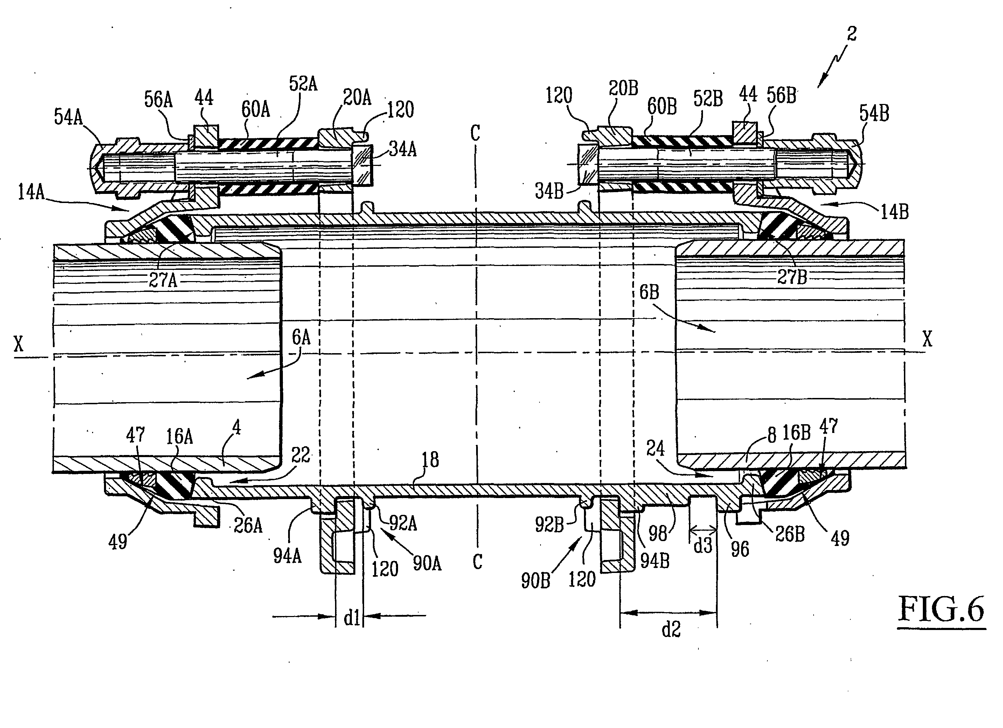

Sur les Figures 6 à 9 est représenté un troisième mode de réalisation d'un joint suivant l'invention.

Ce joint 2 est destiné à relier un premier 4 et un second 8 tubes métalliques, par exemple en fonte, ayant chacun un bout uni 6A, 6B.

Le joint comprend un manchon 18, par exemple en fonte, de forme générale cylindrique creux et sensiblement symétrique par rapport à un plan central C qui s'étend perpendiculairement à l'axe X-X. Les deux extrémités axiales 22, 24 du manchon 18 constituent chacune un bout à emboîtement 26A, 26B. Chaque bout à emboîtement 26A, 26B comporte une surface frontale tronconique 27A, 27B d'application de la garniture d'étanchéité 16A, 16B. Deux brides 20A, 20B, par exemple en fonte, sont reliées axialement, de part et d'autre du plan C, au manchon 18 par des moyens de liaison libérables 90A, 90B. Ces moyens de liaison 90A, 90B forment une liaison à baionnette des brides 20A, 20B sur le manchon, l'une 20B des brides pouvant être immobilisée axialement dans deux positions distinctes comme décrit par la suite.

Le manchon 18 associé aux deux brides 20A, 20B forme le corps de base du joint.

Le joint 2 comprend en outre, pour chacun des bouts à emboîtement 26A, 26B, une garniture d'étanchéité 16A, 16B, une contre-bride 14A, 14B, quatre vis de fixation 52A, 52B, quatre rondelles 56A, 56B, quatre douilles élastiques 60A, 60B et quatre écrous 54A, 54B. Ces éléments sont identiques aux éléments du premier mode de réalisation du joint, et ne seront plus décrits en détail.

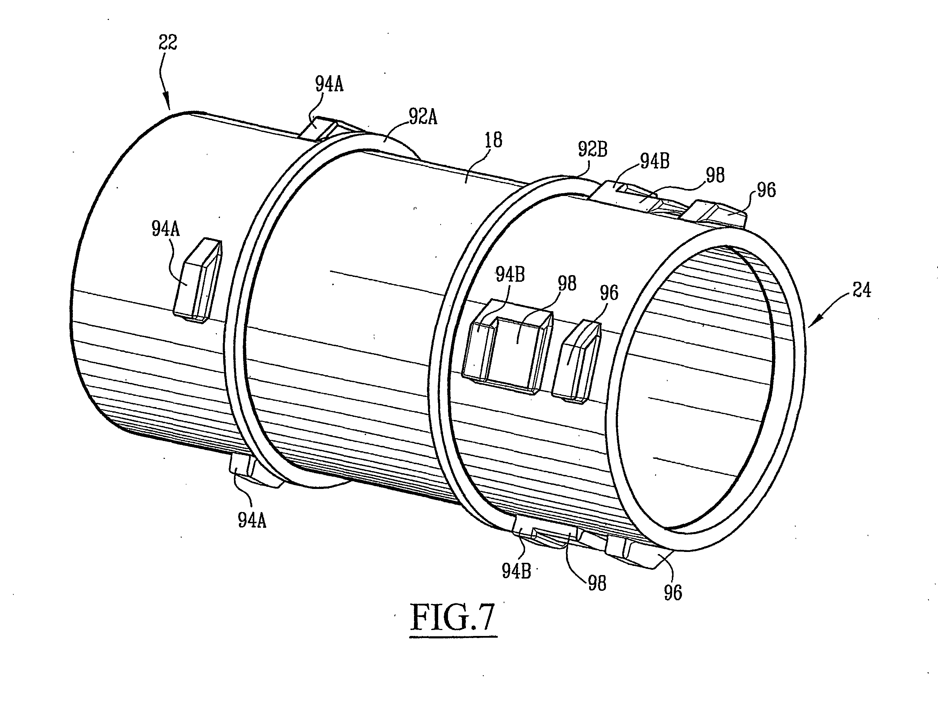

Comme illustré sur la Figure 6, les moyens de liaison 90A, 90B entre le manchon 18 et chacune des brides 20A, 20B comprennent une collerette formant butée 92A, 92B qui fait saillie sur la surface extérieure du manchon 18 au voisinage du plan central C. Ces moyens de liaison 90A, 90B comprennent en outre un premier groupe de quatre ergots 94A, 94B radialement en saillie sur la surface extérieure du manchon 18, qui permettent de fixer la bride 20A, 20B dans une première position axiale sur le manchon (Figure 6). Ces ergots 94A, 94B sont décalés vers l'extrémité respective 22, 24 du manchon 18 par rapport à la collerette 92A, 92B d'une distance d₁ suivant la direction axiale. Comme indiqué sur la Figure 7, les quatre ergots 94A, 94B sont répartis uniformément sur la circonférence du manchon 18 dans un plan perpendiculaire à l'axe X-X.

Les moyens 90B de liaison de la bride 20B, associés au second tube, comprennent également un second groupe de quatre ergots 96 qui font saillie sur le manchon 18 et qui permettent de fixer la bride 20B dans une seconde position axiale. Ils sont identiques aux ergots 94A, 94B et sont décalés axialement vers l'extrémité 24 du manchon associée au second tube d'une distance d₂, par rapport au premier groupe d'ergots 94B de cette extrémité.

Les premiers ergots 94B sont prolongés axialement vers les seconds ergots 96 par des bossages formant butée 98. Ces bossages 98 s'étendent vers les seconds ergots 96 jusqu'à une distance d₃ de ceux-ci, distance qui est identique à d₁. Les bossages formant butée 98 délimitent des surfaces de butée pour la bride 20B lorsque celle-ci est fixée aux seconds ergots 96.

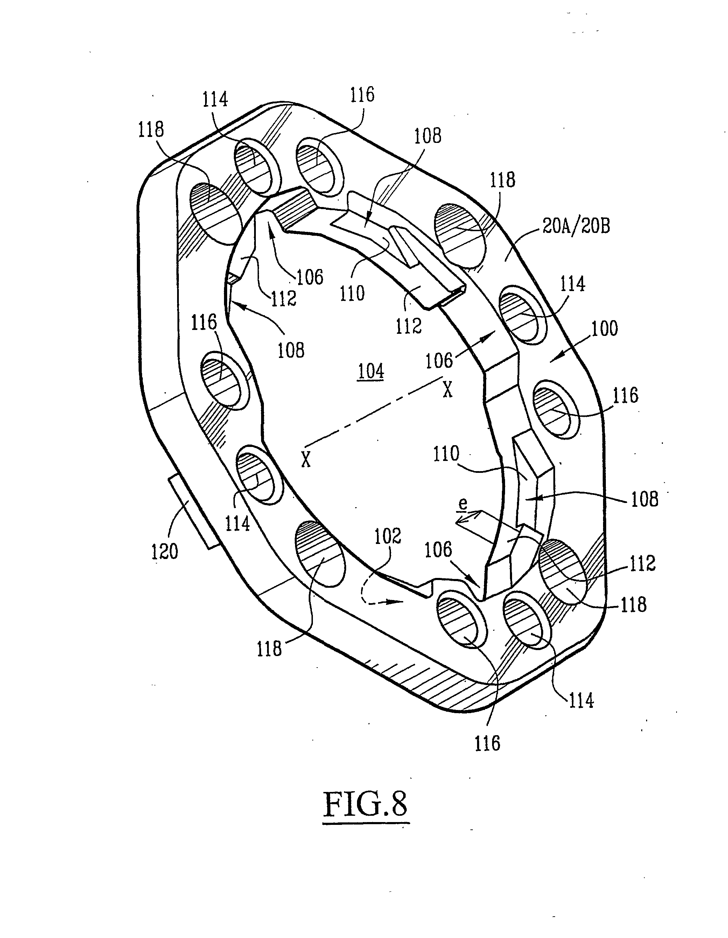

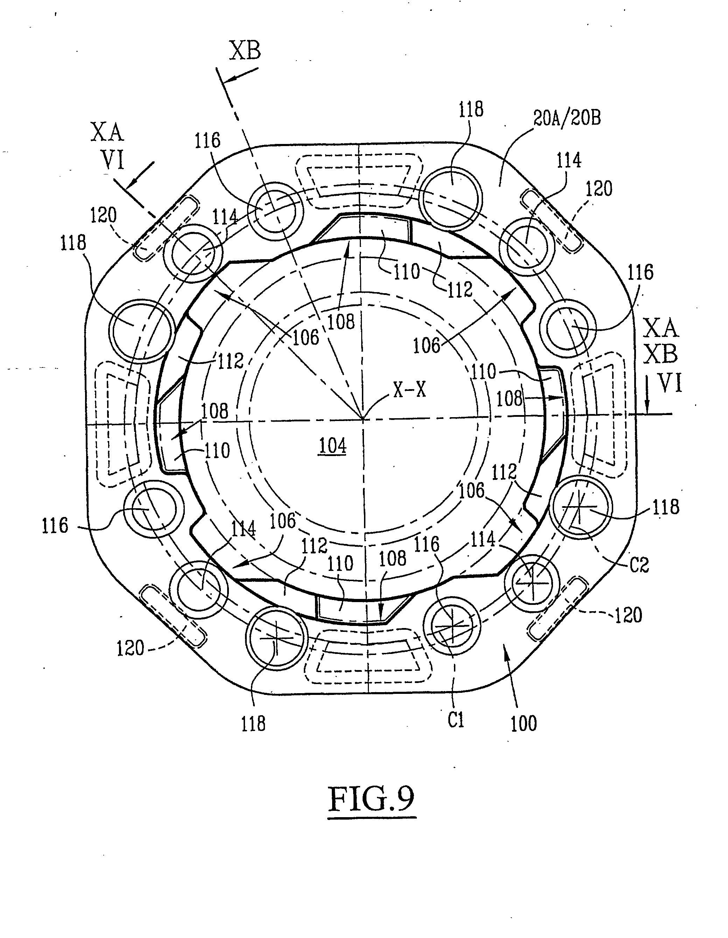

La bride amovible 20A/20B est représentée plus en détail sur les Figures 8 et 9. La Figure 9 est une vue axiale de la bride, vue de l'extrémité associée du manchon 18 vers le plan central C. Le manchon est indiqué en pointillés. Les autres composants sont enlevés. La bride 20A/20B est de forme générale annulaire à surface extérieure octogonale. La bride 20A/20B comporte deux surfaces 100, 102 frontales ainsi qu'une ouverture centrale 104 dont le diamètre correspond au diamètre extérieur du manchon 18. Les moyens de liaison libérables 90A/90B comprennent des premiers 106 et seconds 108 évidements ménagés alternativement suivant la circonférence intérieure de la bride 20A/20B. Ces évidements 106, 108 ont une section transversale complémentaire à la section transversale des ergots 94A, 94B et 96. Les premiers évidements 106 traversent axialement la bride 20A/20B et servent à enfiler celle-ci sur le manchon 18 en permettant le franchissement des ergots. Les évidements 108 sont axialement borgnes et forment des surfaces de retenue 110 s'appliquant contre les ergots 94A, 94B et 96 à l'état assemblé du joint. Les premiers 106 et seconds 108 évidements sont séparés circonférentiellement par des parties 112 en saillie ayant une épaisseur axiale e inférieure ou égale aux distances d₁ et d₃. Lorsque les ergots 94A, 94B, 96 s'appliquent contre les surfaces de retenue 110, ils assurent la retenue axiale. De plus, la bride 20A, 20B est fixée en rotation sur le manchon 18 par complémentarité de formes.

Des premier, deuxième et troisième groupes de quatre trous 114, 116, 118 sont ménagés dans la bride 20A, 20B. Les trous s'étendent parallèlement à l'axe X-X. Les quatre trous 114, 116, 118 de chaque groupe sont repartis uniformément circonférentiellement. Les trous 114 du premier groupe sont adaptés pour recevoir les vis 52A, 52B de fixation de la contre-bride. Des nervures 120 de blocage en rotation des têtes 34A, 34B de vis font saillie sur la surface frontale 102 de la bride 20A, 20B. A l'état monté de la bride, cette surface 102 s'étend du côté opposé de la contre-bride 14A, 14B.

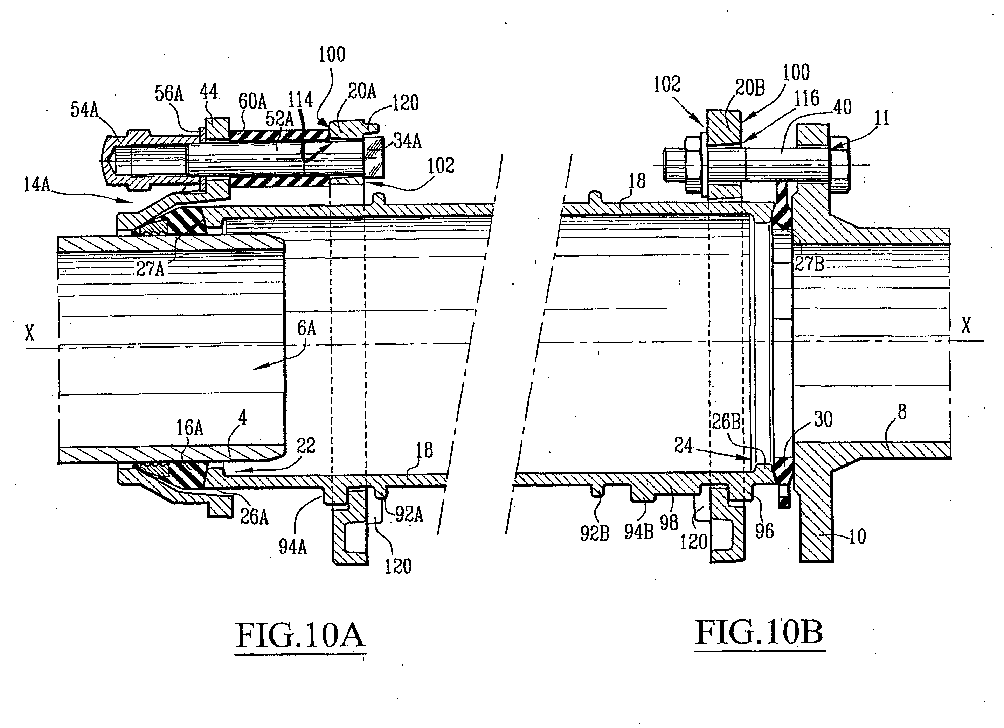

Les trous 116, 118 des deuxième et troisième groupes sont adaptés pour recevoir des boulons 40 de fixation pour une liaison à un tube 8 équipé d'une bride 10, comme représenté sur les Figures 10A et 10B (voir ci-après). Les diamètres des trous 116 du deuxième groupe sont inférieurs à ceux des trous 118 du troisième groupe, permettant ainsi à ces trous de recevoir des boulons 40 de différentes tailles, en fonction de la pression nominale du tube 8 à bride 10. Comme illustré sur la Figure 9, les centres des trous 116, 118 se trouvent sur des cercles primitifs C1, C2 qui sont concentriques à l'axe X-X. On obtient ainsi une bride 20A, 20B, compatible avec des tubes 8 à bride dans une large gamme de pressions nominales.

L'assemblage de la bride 20A, 20B et du manchon 18 de la Figure 6 s'effectue de la façon suivante.

La bride 20A, 20B est enfilée sur l'extrémité 22, 24 correspondante du manchon 18 de telle sorte que les seconds évidements 108 soient ouverts vers l'extrémité correspondante du manchon 18. Puis les premiers évidements 106 sont alignés avec les ergots de retenue 94A, 94B, et 96 et la bride 20A, 20B est enfichée sur le manchon 18 dans le sens dirigé vers le plan central C, franchissant ainsi les ergots et ce jusqu'à ce que la surface frontale 102 de la bride 20A, 20B bute contre la collerette 92A, 92B. Puis la bride 20A, 20B est tournée autour de l'axe central X-X jusqu'à ce que les seconds évidements 108 soient alignés avec les ergots 94A, 94B. La bride 20A, 20B est alors déplacée axialement dans le sens inverse, vers l'extrémité 22, 24 correspondante du manchon, jusqu'à ce que les ergots 94A, 94B s'appliquent contre les surfaces de retenue 110 de la bride 20A, 20B.

L'assemblage du reste des composants s'effectue de façon analogue au premier mode de réalisation. Les vis 52A, 52B sont serrées de telle sorte que les surfaces de retenue 110 s'appliquent contre les ergots 94A, 94B et simultanément les surfaces 47, 49 soient en contact mutuel, sans que la garniture d'étanchéité 16A, 16B soit comprimée. En conséquence, la bride 20A, 20B est empêchée de se déplacer de nouveau vers la collerette 92A, 92B, de tourner et de s'échapper du manchon 18.

Sur les Figures 10A et 10B est représenté le joint selon le troisième mode de réalisation de l'invention dans une configuration modifiée.

La Figure 10A correspond à la coupe suivant la ligne XA-XA de la Figure 9, identique à la coupe représentée sur la Figure 6. La Figure 10B correspond à la coupe suivant la ligne XB-XB de la Figure 9.

Du côté représenté sur la Figure 10A, l'extrémité 22 du manchon 18 est reliée à un bout uni 6, de façon identique à la Figure 6. De l'autre côté, l'extrémité 24 du manchon est reliée à un tube 8 à bride 10.

A cet effet, la contre-bride 14B, la garniture d'étanchéité 16B et les premières vis 52B ont été supprimées. Par contre, le joint comporte un anneau d'étanchéité 30 interposé entre la bride 10 du tube 8 et le bout à emboîtement 26B du manchon. La bride amovible 20B du joint est liée au manchon 18 dans sa seconde position axiale, rapprochée de l'extrémité 24 du manchon. Dans cette position , les surfaces de retenue 110 s'appliquent contre les seconds ergots 96 du manchon. Des boulons 40 s'étendent à travers les seconds trous 116 et serrent le manchon 18 contre la bride 10.

En variante, dans le cas où le joint est lié à un tube 8 ayant une bride 10 pour une pression nominale plus importante, les boulons 40 s'étendent à travers les trous 118.

Le joint adaptable à des liaisons bride-contre-bride ou bride-bride présente plusieurs avantages :
- un seul type de bride 20A, 20B et de manchon 18 sont fabriqués pour les deux types de liaison, ce qui diminue les coûts de fabrication ;
- les moules du manchon 18 et de la bride 20A, 20B sont simples ;
- dans le cas d'une liaison bride 20A, 20B-bride 10, la distance entre les brides et, en conséquence, la longueur des boulons 40 est courte. Ceci mène à un faible coût des boulons et favorise la rigidité de la liaison bride-bride.

Le montage du joint du côté associé au tube à bout uni est identique au montage décrit précédemment pour le joint de la Figure 6.

Pour passer du joint de la Figure 6 à celui de la Figure 10B, on procède de la manière suivante.

Initialement, le joint est dans sa configuration telle que représentée sur la Figure 6.

Les vis 52B sont desserrées et retirées ensemble avec la contre-bride 14B, la garniture d'étanchéité 16B et le tube 8 à bout uni 6B. Puis la bride 20B amovible est poussée axialement vers la collerette 92B et tournée jusqu'à ce que les premiers évidements 106 soient alignés avec les ergots 94B. La bride 20B est alors déplacée axialement jusqu'à l'emplacement des seconds ergots 96. Ensuite, elle est tournée jusqu'à ce que ses seconds évidements 108 soient alignés avec les seconds ergots 96, puis déplacée axialement jusqu'à ce que les surfaces de retenue 110 s'appliquent contre les seconds ergots 96.

L'anneau d'étanchéité 30 est alors appliqué sur la surface libre 27B du bout à emboîtement 26B. Grâce à la forme tronconique de cette surface 27B, l'anneau d'étanchéité 30 est, lors du serrage de la bride 10 contre le bout à emboîtement 26B, centré sur l'axe X-X et est empêché de s'échapper radialement vers l'extérieur.

Enfin, le joint est fixé contre la bride 10 du tube par les boulons 40 à tête hexagonale, les boulons s'étendant à travers les trous 116 ou 118 selon la pression nominale.

Le joint selon ce mode de réalisation est facilement adaptable à des liaisons verrouillées ou non pour différents types d'éléments tubulaires réalisés en différents matériaux (métallique, synthétique ou autre).

Ainsi, dans le cas d'un assemblage étanche et non verrouillé d'éléments tubulaires 4, 8 métalliques, les garnitures d'étanchéité 16A, 16B sont remplacées par des garnitures d'étanchéité similaires mais dépourvues d'éléments métalliques de verrouillage.

D'autre part, dans le cas d'un assemblage étanche et verrouillé d'élément tubulaires 4, 8 en matière synthétique, les garnitures 16A, 16B sont remplacées par la garniture d'étanchéité 84, la rondelle 82 et la bague de verrouillage 80 du deuxième mode de réalisation.

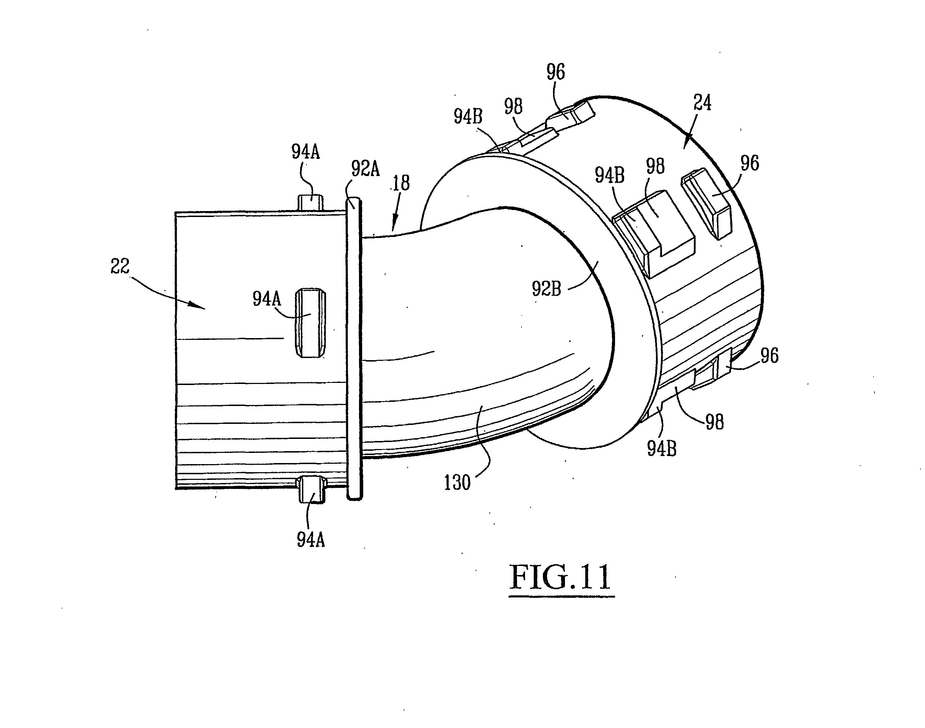

Sur la Figure 11 est représentée une variante du manchon 18 de la Figure 7.

Ce manchon 18 comporte deux extrémités de liaison 22, 24 identiques aux extrémités du manchon de la Figure 7, la seule différence étant que ce manchon comporte une partie centrale 130 en forme de tube coudé.

L'assemblage et le montage d'un joint comprenant ce manchon sont identiques à ceux du joint selon le troisième mode de réalisation.

En variante, le tube 8 est substitué par un autre élément tubulaire, par exemple un élément de robinetterie.

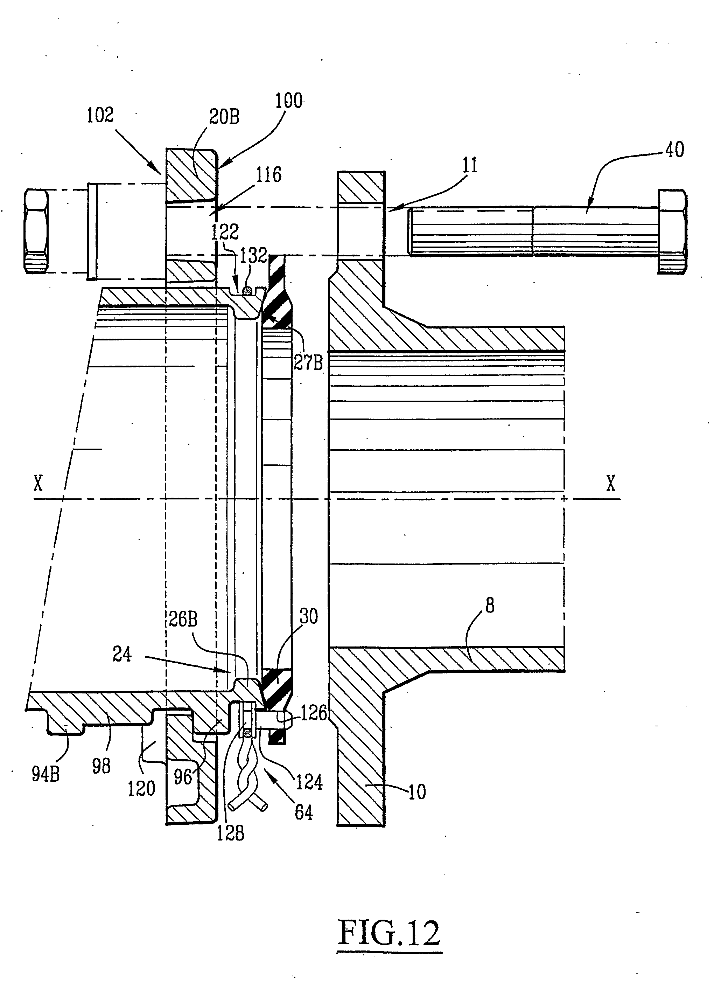

Sur la Figure 12 est représentée une variante de la partie du joint de la Figure 10B.

Comme différence par rapport au joint de cette Figure, le bout à emboîtement 26B comporte des moyens 64 de retenue autonome de l'anneau d'étanchéité 30 par rapport à la surface libre 27B du bout à emboîtement 26B, lorsque le tube 8 n'est pas lié à la bride 20B.

Les moyens de retenue autonome 64 comprennent une gorge annulaire 122 ménagée dans le bout à emboîtement 26B. Cette gorge est ouverte radialement vers l'extérieur et s'étend sur toute la périphérie. Elle est disposée entre la surface libre 27B et les seconds ergots 96. Les moyens de retenue autonome 64 comprennent trois pions 124 fixés à l'anneau d'étanchéité dont un est visible sur la Figure 12. Ces pions 124 sont répartis de façon uniforme sur la circonférence de l'anneau 30. Les pions 124 s'étendent parallèlement à l'axe X-X vers la gorge 122. Les pions sont engagés, par exemple par encliquetage, dans l'épaisseur de l'anneau d'étanchéité 30 au travers de perçages 126.

Chaque pion 124 comporte une embase élargie d'immobilisation 128 qui s'engage dans la gorge 122, notamment par encliquetage. Afin d'empêcher que ces embases 128 ne s'échappent de la gorge, les moyens de maintien 64 comprennent en outre des moyens de sûreté, sous forme d'un fil de fer 132 ou d'un fil en Polyamide 6-6 (« Nylon »). Ce fil 132 entoure les trois embases élargies 128 à l'extérieur et les serre radialement vers l'intérieur. Ainsi, les trois pions 124 maintiennent l'anneau d'étanchéité 30 axialement contre la surface libre 27B du bout à emboîtement 26B et le centrent par rapport à l'axe X-X.

## Revendications

1. Joint, du type destiné à lier de façon étanche un premier élément tubulaire (4) ayant un bout uni (6 ;6A, 6B) à un second élément tubulaire (8), le joint comprenant:
- un corps de base (12) comprenant un bout à emboîtement (26 ; 26A, 26B) qui définit un axe (X-X) et qui est destiné à recevoir le bout uni (6 ; 6A, 6B) dudit premier élément tubulaire (4), et comprenant une bride (20 ; 20A, 20B) immobilisée axialement par rapport au bout à emboîtement (26 ; 26A, 26B) ;
- une contre-bride (14 ; 14A, 14B) disposée coaxialement par rapport au bout à emboîtement (26; 26A, 26B) associé ;
- une garniture d'étanchéité (16 ; 16A, 16B ; 84) disposée entre la contre-bride (14 ; 14A, 14B) et le bout à emboîtement (26, 26A, 26B) ;
- des moyens de serrage (52, 54 ; 52A, 52B, 54A, 54B), disposés entre la bride (20 ; 20A, 20B) et la contre-bride (14 ; 14A, 14B) et adaptés pour déplacer axialement la contre-bride (14 ; 14A, 14B) vers la bride (20 ; 20A, 20B) dans une position de serrage, dans laquelle la garniture d'étanchéité (16 ; 16A, 16B ; 84) est serrée contre le bout à emboîtement (26 ; 26A, 26B) et contre la surface extérieure du premier élément tubulaire (4),
le joint comprenant en outre des moyens de maintien temporaire (60 ; 60A, 60B), interposés entre le corps de base (12) et la contre-bride (14 ; 14A, 14B), et adaptés pour maintenir la contre-bride (14 ; 14A, 14B) dans une position de montage, dans laquelle la garniture d'étanchéité (16 ; 16A ; 16B ; 84) est détendue, lors de l'enfichage du bout uni (6 ; 6A, 6B) dans le bout à emboîtement (26 ; 26A, 26B), **caractérisé en ce que** les moyens de maintien (60 ; 60A , 60B) sont adaptés pour céder sous la force de serrage des moyens de serrage (52, 54 ; 52A, 52B, 54A, 54B).

2. Joint selon la revendication 1, **caractérisé en ce que** les moyens de maintien (60 ; 60A, 60B) sont adaptés pour céder sous la force de serrage des moyens de serrage lors du déplacement de la contre-bride (14 ; 14A, 14B) vers sa position de serrage.

3. Joint selon la revendication 1 ou 2, **caractérisé en ce que** les moyens de maintien (60 ; 60A, 60B) sont adaptés pour maintenir la contre-bride (14 ; 14A, 14B) dans sa position de montage après que la contre-bride (14 ; 14A, 14B) a été amenée dans sa position de serrage et a été amenée de nouveau de sa position de serrage dans sa position de montage.

4. Joint selon l'une quelconque des revendications 1 à 3, **caractérisé en ce que** le joint comprend en outre des moyens de poussée (60 ; 60A, 60B), adaptés pour amener la contre-bride (14 ;14A, 14B) de sa position de serrage vers sa position de montage lors d'une libération des moyens de serrage (52, 54 ; 52A, 52B, 54A, 54B).

5. Joint selon la revendication 4, **caractérisé en ce que** les moyens de poussée (60 ; 60A, 60B) sont adaptés pour amener la contre-bride (14 ; 14A, 14B) dans sa position de montage lors d'une libération des moyens de serrage.

6. Joint selon la revendication 4 ou 5, **caractérisé en ce que** les moyens de poussée sont formés par les moyens de maintien.

7. Joint selon l'une quelconque des revendications 1 à 6, **caractérisé en ce que** les moyens de maintien comprennent au moins une entretoise axialement déformable (60 ; 60A, 60B) sous l'action des moyens de serrage, et disposée entre la contre-bride (14 ;14A, 14B) et le corps de base (12).

8. Joint suivant la revendication 7, **caractérisé en ce que** l'entretoise comprend au moins un organe élastique (60 ; 60A, 60B) disposé entre la bride (20 ; 20A, 20B) et la contre-bride (14 ; 14A, 14B), cet organe étant axialement déformable de manière élastique, et **en ce que** la déformation axiale de l'organe élastique est essentiellement élastique (60 ; 60A, 60B) lorsque la contre-bride (14 ;14A, 14B) est dans sa position de serrage.

9. Joint suivant la revendication 8, **caractérisé en ce que** l'organe élastique (60 ; 60A, 60B) est en matière plastique élastique, notamment en Ethylène-Propylène-Diène-Monomer (EPDM).

10. Joint suivant l'une quelconque des revendications 7 à 9, **caractérisé en ce que** les moyens de serrage comprennent une vis (52 ; 52A, 52B), et **en ce que** l'entretoise est une douille (60 ; 60A, 60B) à surface de révolution fermée, entourant la vis (52 ; 52A, 52B) sur une partie axiale.

11. Joint suivant l'une quelconque des revendications 1 à 10, **caractérisé en ce que** le corps de base (12) comporte à au moins une de ses extrémités, une surface frontale (27B, 62) annulaire libre destinée à être reliée de manière étanche à une bride (10) dudit second élément tubulaire (8), le joint comportant un anneau d'étanchéité (30) appliqué sur la surface frontale (27B, 62) coaxialement à celle-ci, ledit anneau d'étanchéité (30) étant destiné à être comprimé axialement entre la surface frontale (27B, 62) et la bride (10) dudit second élément tubulaire, et **en ce que** le joint comporte en outre des moyens de retenue autonome (64) de l'anneau d'étanchéité (30) par rapport à la surface frontale (27B, 62), en l'absence dudit second élément tubulaire.

12. Joint suivant la revendication 11, **caractérisé en ce que** les moyens de retenue autonome comprennent au moins un organe (69) collé sur la bride (20) du joint et relié à l'anneau d'étanchéité (30).

13. Joint suivant la revendication 11, **caractérisé en ce que** les moyens de retenue autonome (64) comprennent une gorge radiale (122) ménagée dans le bout à emboîtement (26B), des organes (124, 128) fixés à l'anneau d'étanchéité (30) et s'engageant dans la gorge (122), notamment par encliquetage, et **en ce que** les moyens de retenue autonome (64) comprennent en outre un organe de sûreté (132) adapté pour s'opposer à un désengagement desdits organes (124, 128) hors de la gorge (122).

14. Joint suivant l'une quelconque des revendications précédentes, **caractérisé en ce que** la bride (20A, 20B) et le bout à emboîtement (26A, 26B) sont des pièces distinctes détachables, **en ce que** la bride (20A, 20B) est axialement déplaçable par rapport au bout à emboîtement (26A, 26B), et **en ce que** le joint comprend des moyens de liaison libérables (90A, 90B) adaptés pour immobiliser la bride (20A, 20B) par rapport au bout à emboîtement (26A, 26B).

15. Joint suivant la revendication 14, **caractérisé en ce que** les moyens de liaison libérables (90B) sont adaptés pour immobiliser la bride (20B) dans au moins deux positions axiales distinctes.

16. Joint suivant la revendication 14 ou 15, **caractérisé en ce que** les moyens de liaison libérables (90A, 90B) comprennent des groupes d'ergots (94A, 94B, 96), les ergots de chaque groupe faisant radialement saillie sur la surface extérieure du bout à emboîtement (26A, 26B) et étant disposés dans un plan s'étendant perpendiculairement à l'axe (X-X) du bout à emboîtement (26A, 26B), les moyens de liaison libérables (90A, 90B) comprenant en outre des évidements (106, 108) ménagés dans la bride (20A, 20B) et formant une liaison à baionnette avec les ergots.

17. Joint suivant l'une quelconque des revendications précédentes, **caractérisé en ce que** la bride (20A, 20B) comporte un premier et un second groupes de trous (116, 118) traversants cylindriques circulaires adaptés pour recevoir des boulons (40), les trous (116) dudit premier groupe ayant un diamètre inférieur au diamètre des trous (118) dudit second groupe, et **en ce que** les centres des trous des premier et second groupes sont disposés sur des premier (C1) et second (C2) cercles primitifs concentriques et centrés sur l'axe (X-X) du bout à emboîtement (26A, 26B), ledit premier cercle primitif (C1) ayant un diamètre inférieure audit second cercle primitif (C2).

18. Joint suivant l'une quelconque des revendications 1 à 16, **caractérisé en ce que** la bride (20) comporte un groupe de trous à section allongée (38), adaptés pour recevoir des boulons (40), chaque trou (38) s'étendant avec une composante radiale par rapport à l'axe (X-X), et comportant deux extrémités sensiblement de section en arc de cercle, le rayon (R) de l'extrémité radialement extérieure étant supérieur au rayon (r) de l'extrémité radialement intérieure, les centres des arcs de cercle étant disposés sur des cercles primitifs (C1, C2) concentriques et centrés sur l'axe (X-X).

19. Procédé de montage d'un joint selon l'une quelconque des revendications précédentes sur un élément tubulaire ayant un bout uni (6 ; 6A, 6B), **caractérisé en ce qu'**il comprend les étapes successives suivantes :
- on assemble la contre-bride (14 ; 14A, 14B), la garniture d'étanchéité (16 ; 16A ; 16B ; 84), le corps de base (12), les moyens de serrage (52, 54 ; 52A, 52B, 54A, 54B) et les moyens de maintien (60 ; 60A, 60B) ;
- on engage la contre-bride (14 ; 14A, 14B), la garniture d'étanchéité (16 ; 16A, 16B ; 84) et le corps de base (12) préassemblés sur le bout uni, la contre-bride (14 ; 14A, 14B) étant maintenue dans sa position de montage par les moyens de maintien (60 ; 60A, 60B); et
- on amène la contre-bride (14 ; 14A, 14B) dans sa position de serrage, les moyens de maintien (60 ; 60A, 60B) cédant lors du déplacement de la contre-bride (14 ; 14A, 14B) vers sa position de serrage.

## Patentansprüche

1. Kupplung, die zur dichten Verbindung eines ersten rohrförmigen Elements (4) mit einem glatten Ende (6; 6A, 6B) mit einem zweiten rohrförmigen Element (8), wobei die Kupplung umfasst:
- einen Grundkörper (12) mit einem Steckende (26; 26A, 26B), das eine Achse (X-X) definiert und dazu bestimmt ist, das glatte Ende (6; 6A, 6B) des ersten rohrförmigen Elements (4) aufzunehmen, und mit einem Flansch (20; 20A, 20B), der bezüglich des Steckendes (26; 26A, 26B) axial blockiert ist;
- einen Gegenflansch (14; 14A, 14B), der koaxial zu dem zugeordneten Steckende (26; 26A, 26B) angeordnet ist;
- eine Dichtung (16; 16A, 16B; 84), die zwischen dem Gegenflansch (14; 14A, 14B) und dem Steckende (26; 26A, 26B) angeordnet ist;
- Spannmittel (52, 54; 52A, 52B, 54A, 54B), die zwischen dem Flansch (20; 20A, 20B) und dem Gegenflansch (14; 14A, 14B) angeordnet sind und dafür ausgelegt sind, den Gegenflansch (14; 14A, 14B) axial auf den Flansch (20; 20A, 20B) zu in eine angezogene Stellung zu bewegen, in der die Dichtung (16; 16A, 16B; 84) an das Steckende (26; 26A, 26B) und an die Außenfläche des ersten rohrförmigen Elements (4) angedrückt ist,
wobei die Kupplung außerdem Mittel für den vorrübergehenden Halt (60; 60A, 60B) aufweist, die zwischen den Grundkörper (12) und den Gegenflansch (14; 14A, 14B) eingesetzt sind und dafür ausgelegt sind, den Gegenflansch (14; 14A, 14B) bei dem Einstecken des glatten Endes (6; 6A, 6B) in das Steckende (26; 26A, 26B) in einer Montagestellung zu halten, in der die Dichtung (16; 16A, 16B; 84) entspannt ist, **dadurch gekennzeichnet, dass** die Haltemittel (60; 60A, 60B) dafür ausgelegt sind, unter der Spannkraft der Spannmittel (52, 54; 52A, 52B, 54A, 54B) nachzugeben.

2. Kupplung nach Anspruch 1, **dadurch gekennzeichnet, dass** die Haltemittel (60; 60A, 60B) dafür ausgelegt sind, unter der Spannkraft der Spannmittel bei der Bewegung des Gegenflansches (14; 14A, 14B) auf seine Spannstellung zu zu weichen.

3. Kupplung nach Anspruch 1 oder 2, **dadurch gekennzeichnet, dass** die Haltemittel (60; 60A, 60B) dafür ausgelegt sind, den Gegenflansch (14; 14A, 14B) in seiner Montagestellung zu halten, nachdem der Gegenflansch (14; 14A, 14B) in seine Spannstellung gebracht wurde und aus seiner Spannstellung wieder in seine Montagestellung gebracht wurde.

4. Kupplung nach einem der Ansprüche 1 bis 3, **dadurch gekennzeichnet, dass** die Kupplung außerdem Schubmittel (60; 60A, 60B) aufweist, die dafür ausgelegt sind, den Gegenflansch (14; 14A, 14B) bei einer Freigabe der Spannmittel (52, 54; 52A, 52B, 54A, 54B) von seiner Spannstellung in seine Montagestellung zu bringen.

5. Kupplung nach Anspruch 4, **dadurch gekennzeichnet, dass** die Schubmittel (60; 60A, 60B) dafür ausgelegt sind, den Gegenflansch (14; 14A, 14B) bei einer Freigabe der Spannmittel in seine Montagestellung zu bringen.

6. Kupplung nach Anspruch 4 oder 5, **dadurch gekennzeichnet, dass** die Schubmittel von den Haltemitteln gebildet sind.

7. Kupplung nach einem der Ansprüche 1 bis 6, **dadurch gekennzeichnet, dass** die Haltemittel mindestens ein unter der Einwirkung der Spannmittel axial verformbares Zwischenstück (60; 60A, 60B) umfassen, das zwischen dem Gegenflansch (14; 14A, 14B) und dem Grundkörper (12) angeordnet ist.

8. Kupplung nach Anspruch 7, **dadurch gekennzeichnet, dass** das Zwischenstück mindestens ein zwischen dem Flansch (20; 20A, 20B) und dem Gegenflansch (14; 14A, 14B) angeordnetes elastisches Organ (60; 60A, 60B) umfasst, das elastisch axial verformbar ist, und dass die axiale Verformung des elastischen Organs (60; 60A, 60B) im wesentlichen elastisch ist, wenn der Gegenflansch (14; 14A, 14B) in seiner Spannstellung ist.

9. Kupplung nach Anspruch 8, **dadurch gekennzeichnet, dass** das elastische Organ (60; 60A, 60B) aus elastischem Kunststoff, insbesondere Ethylen-Propylen-Dien-Monomer (EPDM), besteht.

10. Kupplung nach einem der Ansprüche 7 bis 9, **dadurch gekennzeichnet, dass** die Spannmittel eine Schraube (52; 52A, 52B) umfassen und dass das Zwischenstück eine Buchse (60; 60A, 60B) mit geschlossener Rotationsfläche ist, die die Schraube (52; 52A, 52B) auf einem axialen Teil umgibt.

11. Kupplung nach einem der Ansprüche 1 bis 10, **dadurch gekennzeichnet, dass** der Basiskörper (12) an mindestens einem seiner Enden eine freie ringförmige Stirnfläche (27B, 62) aufweist, die dazu bestimmt ist, mit einem Flansch (10) des zweiten rohrförmigen Elements (8) dicht verbunden zu werden, wobei die Kupplung einen Dichtring (30) aüfweist, der an die Stirnfläche (27B, 62) koaxial zu dieser angelegt ist, wobei dieser Dichtungsring (30) dazu bestimmt ist, zwischen der Stirnfläche (27B, 62) und dem Flansch (10) des zweiten rohrförmigen Elements axial komprimiert zu werden, und dass die Kupplung außerdem Mittel (64) zum autonomen Halt des Dichtrings (30) an der Stirnfläche (27B, 62) bei Fehlen des zweiten rohrförmigen Elements aufweist.

12. Kupplung nach Anspruch 11, **dadurch gekennzeichnet, dass** die Mittel zum autonomen Halt mindestens ein an dem Flansch (20) der Kupp lung angeklebtes und mit dem Dichtring (30) verbundenes Organ (69) umfassen.

13. Kupplung nach Anspruch 11, **dadurch gekennzeichnet, dass** die Mittel zum autonomen Halt (64) eine radiale Nut (122) umfassen, die in dem Steckende (26B) vorgesehen ist, und Organe (124, 128), die an dem Dichtring (30) befestigt sind und in die Nut (122) insbesondere einrastend eintreten, und dass die Mittel zum autonomen Halt (64) außerdem ein Sicherungsorgan (132) umfassen, das dafür ausgelegt ist, sich einem Austreten dieser Organe (124, 128) aus der Nut (122) zu wiedersetzen.

14. Kupplung nach einem der vorhergehenden Ansprüche, **dadurch gekennzeichnet, dass** der Flansch (20A, 20B) und das Steckende (26A, 26B) getrennte, ablösbare Teile sind, dass der Flansch (20A, 20B) bezüglich des Steckendes (26A, 26B) axial beweglich ist und dass die Kupplung freigebbare Verbindungsmittel (90A, 90B) aufweist, die dafür ausgelegt sind, den Flansch (20A, 20B) bezüglich des Steckendes (26A, 26B) zu blockieren.

15. Kupplung nach Anspruch 14, **dadurch gekennzeichnet, dass** die freigebbaren Verbindungsmittel (90B) dafür ausgelegt sind, den Flansch (20B) in mindestens zwei verschiedenen axialen Stellungen zu blockieren.

16. Kupplung nach Anspruch 14 oder 15, **dadurch gekennzeichnet, dass** die freigebbaren Verbindungsmittel (90A, 90B) Gruppen von Nasen (94A, 94B, 96) umfassen, wobei die Nasen jeder Gruppe auf der Außenfläche des Steckendes (26A, 26B) radial vorstehen und in einer sich zur Achse (X-X) des Steckendes (26A, 26B) senkrecht erstreckenden Ebene angeordnet sind, wobei die freigebbaren Verbindungsmittel (90A, 90B) außerdem Aussparungen (106, 108) umfassen, die in dem Flansch (20A, 20B) vorgesehen sind und mit den Nasen eine Bajonettverbindung bilden.

17. Kupplung nach einem der vorhergehenden Ansprüche, **dadurch gekennzeichnet, dass** der Flansch (20A, 20B) eine erste und eine zweite Gruppe von kreisförmigen zylindrischen durchgehenden Löchern (116, 118) aufweist, die dafür ausgelegt sind, Bolzen (40) aufzunehmen, wobei die Löcher (116) der ersten Gruppe einen kleineren Durchmesser aus die Löcher (118) der zweiten Gruppe besitzen, und dass die Mittelpunkte der Löcher der ersten und der zweiten Gruppe auf einem ersten Teilkreis (C1) und einem zweiten Teilkreis (C2) angeordnet sind, die konzentrisch und auf der Achse (X-X) des Steckendes (26A, 26B) zentriert sind, wobei der erste Teilkreis (C1) einen kleineren Durchmesser als der zweite Teilkreis (C2) besitzt.

18. Kupplung nach einem der Ansprüche 1 bis 16, **dadurch gekennzeichnet, dass** der Flansch (20) eine Gruppe von Löchern (38) mit länglichem Querschnitt aufweist, die dafür ausgelegt sind, Bolzen (40) aufzunehmen, wobei jedes Loch (38) sich bezüglich der Achse (X-X) mit einer radialen Komponente erstreckt und zwei Enden mit im wesentlichen Kreisbogenquerschnitt aufweist, wobei der Radius (R) des radial äußeren Endes größer als der Radius (r) des radial inneren Endes ist, wobei die Enden der Kreisbögen auf konzentrischen und auf der Achse (X-X) zentrierten Teilkreisen (C1, C2) angeordnet sind.

19. Verfahren zur Montage einer Kupplung nach einem der vorhergehenden Ansprüche auf einem rohrförmigen Element mit einem glatten Ende (6; 6A, 6B), **dadurch gekennzeichnet, dass** es die folgenden aufeinanderfolgenden Schritte umfasst:
- man montiert den Gegenflansch (14; 14A, 14B), die Dichtung (16; 16A, 16B; 84), den Grundkörper (12), die Spannmittel (52, 54; 52A, 52B, 54A, 54B) und die Haltemittel (60; 60A, 60B);
- man steckt den Gegenflansch (14; 14A, 14B), die Dichtung (16; 16A, 16B; 84) und den Grundkörper (12) im vormontierten Zustand auf das glatte Ende auf, wobei der Gegenflansch (14; 14A, 14B) durch die Haltemittel (60; 60A, 60B) in seiner Montagestellung gehalten wird; und
- man bringt den Gegenflansch (14; 14A, 14B) in seine Spannstellung, wobei die Haltemittel (60; 60A, 60B) bei der Bewegung des Gegenflansches (14; 14A, 14B) auf seine Spannstellung zu nachgeben.

## Claims

1. Joint, of the type intended to connect a first tubular element (4) having a smooth end (6; 6A, 6B) to a second tubular element (8) in leak right manner, the joint comprising:
- a base member (12) comprising a socket end (26; 26A, 26B) which defines an axis (X-X) and which is adapted to receive the smooth end (6; 6A, 6B) of said first tubular element (4), and comprising a flange (20; 20A, 20B) which is axially immobilised relative to the socket end (26; 26A, 26B);
- a counter-flange (14; 14A, 14B) arranged coaxially in relation to the associated socket end (26; 26A, 26B);
- a sealing gasket (16; 16A, 16B; 84) disposed between the counter-flange (14; 14A, 14B) and the socket end (26; 26A, 26B);
- gripping means (52, 54; 52A, 52B, 54A, 54B) disposed between the flange (20; 20A, 20B) and the counter-flange (14; 14A, 14B) and adapted to move the counter-flange (14; 14A, 14B) axially towards the flange (20; 20A, 20B) into a tightening position in which the sealing gasket (16; 16A, 16B; 84) is tightened against the socket end (26; 26A, 26B) and against the outer surface of the first tubular element (4),
the joint further comprising temporary holding means (60; 60A, 60B) interposed between the base member (12) and the counter-flange (14; 14A, 14B) and adapted to hold the counter-flange (14; 14A, 14B) in an assembly position in which the sealing gasket (16; 16A, 16B; 84) is free from tension, when the smooth end (6; 6A, 6B) is inserted in the socket end (26; 26A, 26B), **characterised in that** the holding means (60; 60A, 60B) are adapted to give way under the tightening force of the tightening means (52, 54; 52A, 52B, 54A, 54B).

2. Joint according to claim 1, **characterised in that** the holding means (60; 60A, 60B) are adapted to give way under the gripping force of the gripping means during the movement of the counter-flange (14; 14A, 14B) towards its gripping position.

3. Joint according to claim 1 or 2, **characterised in that** the holding means (60; 60A, 60B) are adapted to hold the counter-flange (14; 14A, 14B) in its assembly position after the counter-flange (14; 14A, 14B) has been brought into its gripping position and has been brought back from its gripping position into its assembly position.

4. Joint according to any one of claims 1 to 3, **characterised in that** the joint further comprises pushing means (60; 60A, 60B) adapted to bring the counter-flange (14; 14A, 14B) from its gripping position to its assembly position when the gripping means (52, 54; 52A, 52B, 54A, 54B) are released.

5. Joint according to claim 4, **characterised in that** the pushing means (60; 60A, 60B) are adapted to bring the counter-flange (14; 14A, 14B) into its assembly position when the gripping means are released.

6. Joint according to claim 4 or 5, **characterised in that** the pushing means are formed by the holding means.

7. Joint according to any one of claims 1 to 6, **characterised in that** the holding means comprise at least one spacer (60; 60A, 60B) which is axially deformable under the effect of the gripping means, and is disposed between the counter-flange (14; 14A, 14B) and the base member (12).

8. Joint according to claim 7, **characterised in that** the spacer comprises at least one resilient member (60; 60A, 60B) disposed between the flange (20; 20A, 20B) and the counter-flange (14; 14A, 14B), this member being resiliently axially deformable, and **in that** the axial deformation of the resilient member is essentially elastic (60; 60A, 60B) when the counter-flange (14; 14A, 14B) is in its gripping position.

9. Joint according to claim 8, **characterised in that** the resilient member (60; 60A, 60B) is made of a resilient plastics material, notably ethylenepropylene-diene monomer (EPDM).

10. Joint according to any one of claims 7 to 9, **characterised in that** the gripping means comprise a screw (52; 52A, 52B) and **in that** the spacer is a bushing (60; 60A, 60B) with a closed surface of revolution surrounding the screw (52; 52A, 52B) over an axial portion thereof.

11. Joint according to any one of claims 1 to 10, **characterised in that** the base member (12) comprises, at at least one of its ends, a free annular front surface (27B, 62) adapted to be connected in leak tight manner to a flange (10) of said second tubular element (8), the joint comprising a sealing ring (30) applied to the front surface (27B, 62) coaxially therewith, said sealing ring (30) being adapted to be compressed axially between the front surface (27B, 62) and the flange (10) of said second tubular element, and **in that** the joint further comprises autonomous holding means (64) for the sealing ring (30) relative to the front surface (27B, 62), in the absence of said second tubular element.

12. Joint according to claim 11, **characterised in that** the autonomous retaining means comprise at least one member (69) glued to the flange (20) of the joint and connected to the sealing ring (30).

13. Joint according to claim 11, **characterised in that** the autonomous retaining means (64) comprise a radial groove (122) formed in the socket end (26B), members (124, 128) fixed to the sealing ring (30) and engaging in the groove (122), notably by snap-fit, and **in that** the autonomous holding means (64) further comprise a safety member (132) adapted to prevent disengagement of said members (124, 128) from the groove (122).

14. Joint according to any one of the preceding claims, **characterised in that** the flange (20A, 20B) and the socket end (26A, 26B) are removable separate parts, **in that** the flange (20A, 20B) is axially displaceable relative to the socket end (26A, 26B), and **in that** the joint comprises releasable connecting means (90A, 90B) adapted to immobilise the flange (20A, 20B) relative to the socket end (26A, 26B).

15. Joint according to claim 14, **characterised in that** the releasable connecting means (90B) are adapted to immobilise the flange (20B) in at least two separate axial positions.

16. Joint according to claim 14 or 15, **characterised in that** the releasable connecting means (90A, 90B) comprise sets of lugs (94A, 94B, 96), the lugs in each set projecting radially over the outer surface of the socket end (26A, 26B) and being disposed in a plane extending perpendicularly to the axis (X-X) of the socket end (26A, 26B), the releasable connecting means (90A, 90B) further comprising recesses (106, 108) formed in the flange (20A, 20B) and forming a bayonet connecting with the lugs.

17. Joint according to any one of the preceding claims, **characterised in that** the flange (20A, 20B) comprises first and second sets of circular cylindrical through-holes (116, 118) adapted to accommodated bolts (40), the holes (116) in said first set having a diameter which is less than that of the holes (118) of the second set, and **in that** the centres of the holes in the first and second sets are disposed on first and second concentric primitive circles (C1, C2, respectively) centred on the axis (X-X) of the socket end (26A, 26B), said first primitive circle (C1) having a smaller diameter than said second primitive circle (C2).

18. Joint according to any one of claims 1 to 16, **characterised in that** the flange (20) comprises a set of holes of elongate section (38), adapted to accommodate bolts (40), each hole (38) extending with a radial component relative to the axis (X-X), and comprising two ends of substantially arcuate cross section, the radius (R) of the radially outer end being greater than the radius (r) of the radially inner end, the centres of the arcs being disposed on concentric primitive circles (C1, C2) centred on the axis (X-X).

19. Method of assembling a joint according to any one of the preceding claims on a tubular element having a smooth end (6; 6A, 6B), **characterised in that** it comprises the following successive steps:
- the counter-flange (14; 14A, 14B), the sealing gasket (16; 16A; 16B; 84), the base member (12), the gripping means (52, 54; 52A, 52B, 54A, 54B) and the holding means (60; 60A, 60B) are assembled;
- the counter-flange (14; 14A, 14B), the sealing gasket (16; 16A, 16B; 84), and the base member (12), which have been pre-assembled are engaged on the smooth end, the counter-flange (14; 14A, 14B) being held in its assembly position by the holding means (60; 60A, 60B); and
- the counter-flange (14; 14A, 14B) is brought into its gripping position, the holding means (60; 60A, 60B) giving way as the counter-flange (14; 14A, 14B) is moved into its gripping position.
